(19) Europäisches Patentamt
European Patent Office
Office européen des brevets

(11) Veröffentlichungsnummer : **0 192 964**
**B1**

(12) # EUROPÄISCHE PATENTSCHRIFT

(45) Veröffentlichungstag der Patentschrift : **30.11.88**

(51) Int. Cl.[4] : **C 09 B 62/26**, C 09 B 62/517, D 06 P 1/38

(21) Anmeldenummer : **86100875.3**

(22) Anmeldetag : **23.01.86**

(54) **Phthalocyanin-Reaktivfarbstoffe.**

(30) Priorität : **05.02.85 DE 3503747**

(43) Veröffentlichungstag der Anmeldung : **03.09.86 Patentblatt 86/36**

(45) Bekanntmachung des Hinweises auf die Patenterteilung : **30.11.88 Patentblatt 88/48**

(84) Benannte Vertragsstaaten : **CH DE FR GB LI**

(56) Entgegenhaltungen :
**EP-A- 0 133 843**
**DE-A- 1 810 229**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**

**EP 0 192 964 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Phthalocyanin-Reaktivfarbstoffe, die in Form der freien Säure der Formel (1) entsprechen

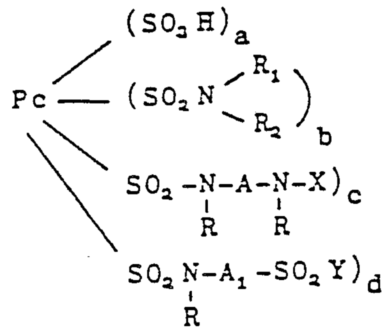

worin

Pc = Rest eines Phthalocyanins

$R_1$ und $R_2$ gleich oder verschieden sein können und für Wasserstoff oder gegebenenfalls substituiertes $C_1$-$C_6$-Alkyl stehen können oder worin $R_1$ und $R_2$ zusammen mit dem durch sie eingeschlossenen Stickstoffatom einen gegebenenfalls weitere Heteroatome enthaltenden heterocyclischen Rest bilden

R = Wasserstoff, gegebenenfalls substituiertes $C_1$-$C_6$-Alkyl

A, $A_1$ = zweiwertiger aliphatischer, araliphatischer oder aromatischer Rest

X = Pyrimidinrest, der mindestens ein abspaltbares Fluoratom enthält

Y = $-CH=CH_2$ oder $-CH_2-CH_2-Z$, wobei Z eine abspaltbare Gruppe bedeutet,

a = 0 bis 2

b = 0 bis 1

c = 0,2 bis 2

d = 0,2 bis 2

wobei a + b + c + d = 3 bis 4 und c + d = 1 bis 3.

mit Ausnahme der Farbstoffe der Formeln

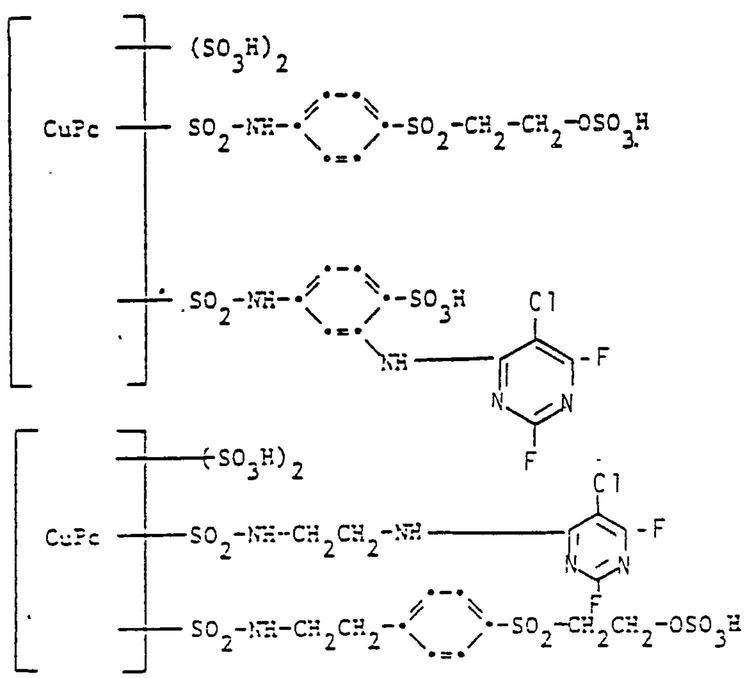

und

Gegebenenfalls substituiertes $C_1$-$C_6$-Alkyl, R, $R_1$ und $R_2$ steht vorzugsweise für gegebenenfalls durch $OCH_3$, OH, COOH, $SO_3H$ oder Phenyl substituiertes $C_1$-$C_4$-Alkyl, z. B. Methyl, Ethyl, Propyl, Butyl, β-Hydroxyethyl, β-Sulfatoethyl, β-Methoxyethyl.

Beispiel für Y sind : $-CH_2CH_2OSO_3H$, $-CH_2CH_2Cl$, $-CH_2CH_2S_2O_3H$, $-CH_2CH_2OPO_3H_2$,

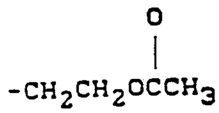

Bilden $R_1$ und $R_2$ zusammen mit dem durch sie eingeschlossenen Stickstoffatom einen gegebenenfalls weitere Heteroatome enthaltenden heterocyclischen Rest, so kommen vorzugsweise folgende Gruppierungen in Betracht :

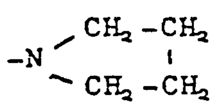 , 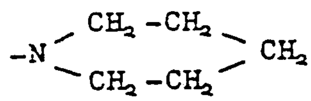 , 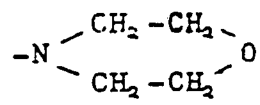

Beispiele für Reste A und $A_1$ sind folgende :

a) aliphatisch

$-CH_2CH_2-$, $-CH_2CH_2-CH_2-$, $-(CH_2)_6-$, $-CH_2CH_2OCH_2CH_2-$,

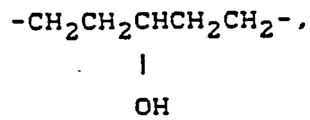

b) araliphatisch

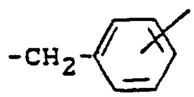 , 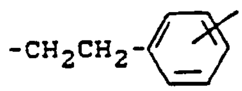

c) aromatisch

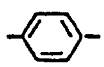 , 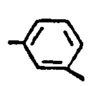 , 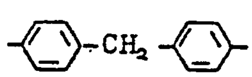 , 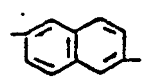

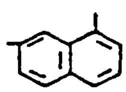 , 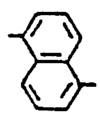

Die Phenylen- oder Naphthylenringe können selbst verständlich Substituenten enthalten, beispielsweise $C_1$-$C_4$-Alkyl wie $CH_3$, $C_2H_5$, $C_1$-$C_4$-Alkoxy wie $OCH_3$, $OC_2H_5$, Halogen wie Cl oder Br.

Geeignete Pyrimidinreste X, die mindestens einen unter Färbebedingungen abspaltbaren Fluorsubstituenten enthalten, sind beispielsweise folgende :

2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl, 2,6-Difluor-5-methyl-4-pyrimidinyl, 2,5-Difluor-6-methyl-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-Fluor-4-pyrimidinyl-, 6-Trifluormethyl-2-Fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-4-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-cyan-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl, 6-Fluor-5-chlor-pyrimidinyl-4, 6-Fluor-5-trifluormethyl-pyrimidinyl-4, 6-Fluor-2-methyl-pyrimidinyl-4, 6-Fluor-5-chlor-2-trifluormethyl-pyrimidinyl-4, 6-Fluor-5-chlor-2-methyl-pyrimidinyl-4, 5,6-Difluorpyrimidinyl-4, 6-Fluor-5-chlor-2-trifluormethyl-pyrimidinyl-4, 6-Fluor-2-phenyl-pyrimidinyl-4, 6-Fluor-5-cyan-pyrimidinyl-4, 6-Fluor-5-nitro-pyrimidinyl-4, 6-Fluor-5-methylsulfonyl-pyrimidinyl-4, 6-Fluor-5-phenylsulfonyl-pyrimidinyl-4, 6-Fluor-2,5-dichlor-pyrimidinyl-4.

Der Phthalocyaninrest Pc kann metallfrei sein, er ist jedoch vorzugsweise metallhaltig. Als Metalle kommen Kobalt, Nickel und Kupfer in Betracht.

In den Farbstoffen der Formel (1) ist jede Sulfonsäure-, bzw. Sulfonamidgruppe an einen anderen Benzolring des Phthalocyanin in 3- oder 4-Stellung gebunden.

Im Rahmen der Formel (1) sind Verbindungen bevorzugt, in denen R, $R_1$ und $R_2$ = Wasserstoff

A und $A_1$ = 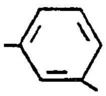 oder 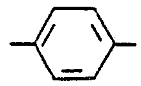

Y = $CH_2CH_2OSO_3H$
weiterhin solche, in denen

X = 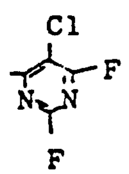 , 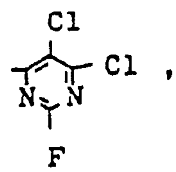 , 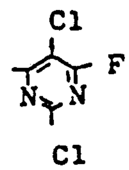 , 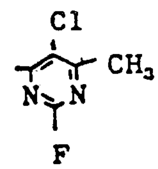

und solche, in denen c + d eine Zahl von 1,5 bis 2,5 darstellt,

Phthalocyaninverbindungen der Formel (1) lassen sich dadurch herstellen, daß ein Phthalocyaninsulfochlorid der Formel

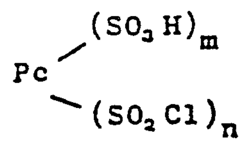 (2)

worin Pc die angegebene Bedeutung hat und m eine Zahl von 0 bis 3, n eine Zahl von 1 bis 4 darstellt und die Summe aus m und n höchstens 4 beträgt, mit einem Amin der Formel

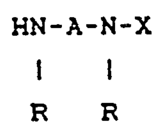 (3)

einem Amin der Formel

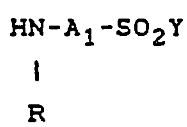 (4)

und gegebenenfalls in Anwesenheit eines weiteren Amins der Formel

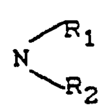 (5)

umsetzt.

Die Amine der Formeln (3) und (4) werden gegenüber dem Phthalocyaninsulfochlorid der Formel (2) in einem molaren Überschuß von 0-70 % über die durch den jeweiligen Zahlenwert des Index c und d (vergl. Formel 1) vorgegebene molare Menge hinaus eingesetzt.

Die Umsetzung von Verbindungen der Formel (2) mit den Aminen (3), (4) und gegebenenfalls (5) wird vorzugsweise im wäßrigen, oder aber im wäßrig-organischen Medium im pH-Bereich von 3-8 und bei Temperaturen zwischen 0° und 60° durchgeführt, wobei man zweckmäßigerweise die freiwerdende Säure durch Zusatz von Alkali, wie z. B. Natriumbicarbonat, Soda, Natronlauge, Natriumacetat, Lithiumcarbonat, Lithiumhydroxid oder Kaliumcarbonat neutralisiert bzw. abpuffert oder gegebenenfalls die freiwerdende Säure durch einen Überschuß an Amin (5) bindet. Als organische Lösungsmittel kommen Ethanol, Chlorbenzol, Dichlorbenzol, Dimethylformamid und ähnliche infrage. Man kann die Kondensation auch in Gegenwart eines Reaktionsbeschleunigers wie Pyridin, Pyridincarbonsäure oder Pyridinsulfonsäure ausführen. Die Amine (3), (4) und gegebenenfalls (5) können gleichzeitig oder nacheinander in beliebiger Reihenfolge mit den Verbindungen (2) umgesetzt werden. Enthält das

Phthalocyaninsulfonsäurechlorid (2) weniger Sulfonsäuregruppen, als sie für die Verbindungen (1) erwünscht sind, so werden diejenigen Sulfochloridgruppen, die mit den Aminen (3), (4) und gegebenenfalls (5) nicht reagiert haben, zu Sulfonsäuregruppen hydrolysiert.

Die Farbstoffe der allgemeinen Formel (1) fallen bei der Synthese gewöhnlich in Form von Gemischen der Einzelfarbstoffe an, die sich voneinander durch den Substitutionsgrad a, b, c und d unterscheiden, weshalb bei der Aufstellung der die erfindungsgemäßen Farbstoffe abdeckenden Formeln gebrochene Werte der Indices a, b, c und d angegeben werden. Diese gebrochenen Zahlen stellen Durchschnittswerte dar, die experimentell und analytisch ermittelt werden.

Als Ausgangsverbindungen der Formel (2) finden beispielsweise Sulfonsäurechloride oder sulfogruppenhaltige Sulfonsäurechloride des metallfreien Phthalocyanins Verwendung, vorzugsweise jedoch solche von metallhaltigen Phthalocyaninen, wie beispielsweise Kupferphthalocyanin-(3)-tetrasulfochlorid, Kupfer- oder Nickelphthalocyanin-(3)-tetrasulfochlorid, Kobaltphthalocyanin-(3)-trisulfochlorid oder Kupferphthalocyanin-(3)-trisulfochlorid-monosulfonsäure.

Die Sulfonsäurechloride der Formel (2) werden nach bekannten Verfahren hergestellt (Deutsche Patentschrift 891 121).

Beispiel für Amine der Formel (3) sind :

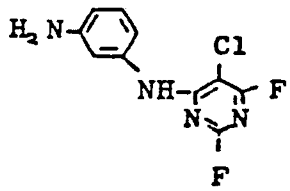

"

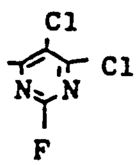

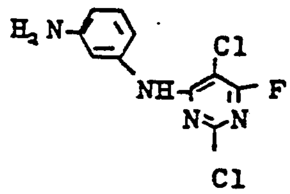

"

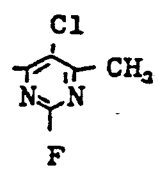

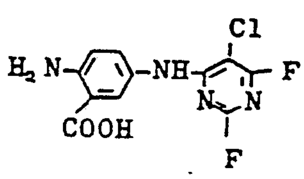

"

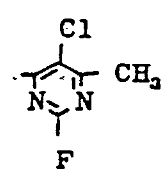

"

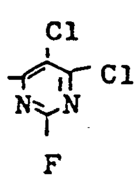

(Fortsetzung)

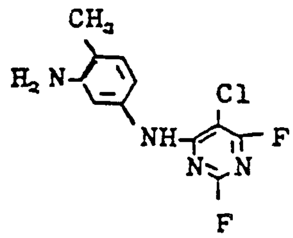

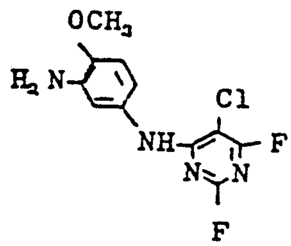

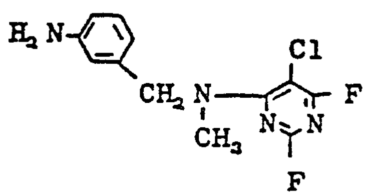

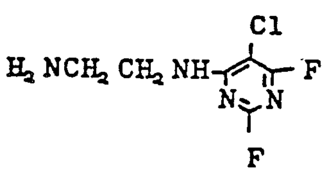

Beispiel für Amine (4) sind folgende :

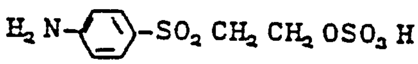

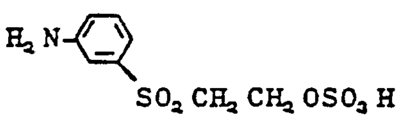

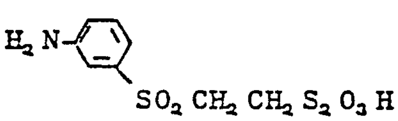

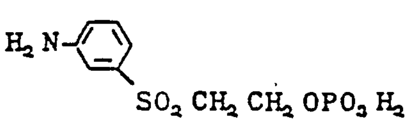

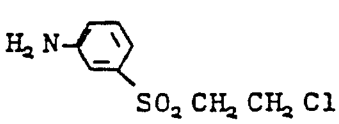

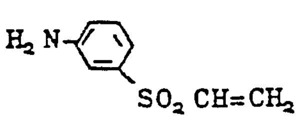

(Fortsetzung)

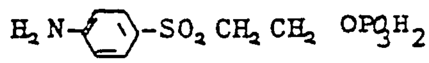

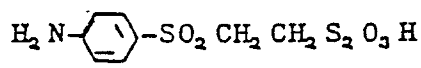

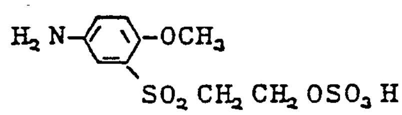

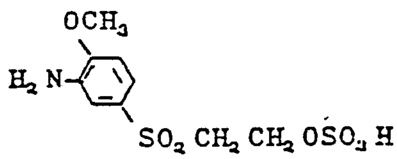

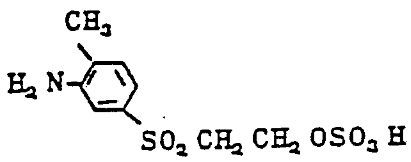

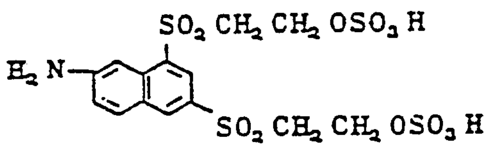

$H_2NCH_2CH_2SO_2CH_2CH_2OSO_3H$

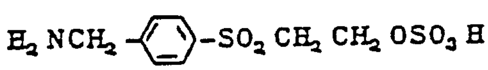

Amine der Formel (5) sind beispielsweise : $NH_3$, $CH_3NH_2$, $C_2H_5NH_2$, $n\text{-}C_3H_7NH_2$, $i\text{-}C_3H_7NH_2$, $H_2NCH_2OH$, $HN(CH_2CH_2OH)_2$, $H_2NCH_2CH_2OCH_3$, $H_2NCH_2COOH$, $H_2NCH_2CH_2SO_3H$,

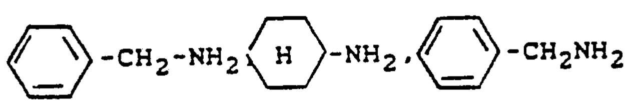

Die als Reaktionsbeschleuniger verwendeten Pyridinsulfonsäuren oder Pyridincarbonsäuren sind insbesondere Pyridinmono-, di- und Trisulfonsäuren. Pyridin-mono-, di- und -tri-carbonsäuren, weiterhin deren im Heterocyclus durch nichtionogene Substituenten substituierte Derivate, wie beispielsweise methyl- und ethylsubstituierte Pyridinsulfonsäuren oder -carbonsäuren. Solche Pyridinverbindungen sind beispielsweise die Pyridin-2-sulfonsäure, Pyridin-3-sulfonsäure, Pyridin-4-sulfonsäure, Pyridin-2-carbonsäure, Pyridin-3-carbonsäure, Pyridin-4-carbonsäure, Pyridin-2,3-dicarbonsäure, Pyridin-2,4-dicarbonsäure, Pyridin-2,5-dicarbonsäure, Pyridin-2,6-dicarbonsäure, Pyridin-3,4-dicarbonsäure, Pyridin-3,5-dicarbonsäure, Pyridin-2,3,4-tricarbonsäure, Pyridin-2,4,5-tricarbonsäure, 2-Methylpyridin-3-sulfonsäure, 4-Methylpyridin-3-carbonsäure, 4-Ethylpyridin-3-carbonsäure, 6-Methylpyridin-3-carbonsäure, 4,6-Dimethylpyridin-2-carbonsäure, 2,6-Dimethylpyridin-3-carbonsäure und 2-Methylpyridin-3,4-dicarbonsäure. Besonders bevorzugt und vorteilhaft ist die Verwendung von Pyridin-3-carbonsäure (Nicotinsäure), die praktisch untoxisch und geruchlos ist (DE-PS 2 824 211 und DE-OS 12 906 442).

Die Isolierung der nach den vorstehend beschriebenen Verfahren erhaltenen Phthalocyaninfarbstoffen erfolgt in üblicher Weise durch Aussalzen, beispielsweise mit Natrium- oder Kaliumchlorid, und/oder durch Ansäuern mit einer Mineralsäure oder durch Eindampfen der neutralen oder schwach sauren wäßrigen Farbstofflösung, vorzugsweise bei mäßig erhöhter Temperatur und vermindertem Druck oder durch Sprühtrocknung. Die neuen Farbstoffe der Formel (1) eignen sich zum Färben und Bedrucken von

Hydroxyl- oder Amidgruppen enthaltenden Materialien, wie Textilfasern-, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Mengen beziehen sich auf die freie Säure. Die in den Beispielen angegebenen Farbkennzahlen beziehen sich auf Colour Index Hue Indication Chart (Indicator Numbers).

Gegenstand der älteren EP-A-0 133 843 sind ganz generell Reaktivfarbstoffe, welche 1-2 Difluorchlor-pyrimidinyl-Reaktivgruppen sowie 1-2 Reaktivgruppen der Formel $—SO_2X$ mit X = Vinyl, β-Sulfatoethyl, β-Thiosulfatoethyl, β-Chlorethyl oder β-Acetoxyethyl aufweisen. Im Rahmen dieser Anmeldung werden zwei Einzelfarbstoffe mit je einem Rest $—SO_2CH_2CH_2OSO_3H$ und einem Rest

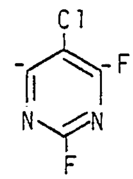

beschrieben.

Beispiel 1

0,1 Mol wasserfeuchte Paste Kupferphthalocyanin(3)-Sulfochlorid-sulfonsäure der durchschnittlichen Zusammensetzung

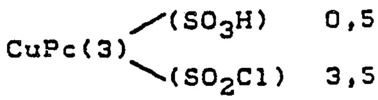

werden in 300 ml Eiswasser angerührt. Man stellt auf pH 6, fügt 0,15 mol 4-β-Sulfatoethylsulfonyl-anilin als neutrale Lösung in 200 ml Wasser und 2 g Nicotinsäure zu. Dann erwärmt man auf 20° und kondensiert solange bis pH 5,5-6 bis 0,15 mol Natronlauge verbraucht sind.

Dann gibt man 0,1 mol 1-Amino-3-(2,'6'-difluor-5'-chlorpyrimidinyl-4'-amino)-benzol zu, erwärmt auf 40° und acyliert bei pH 5,5-6, bis keine Natronlauge mehr verbraucht wird.

Es wird dann soviel Wasser zugesetzt, daß der Farbstoff bei 40° gelöst ist. Die Lösung wird geklärt und der Rückstand getrocknet. Dabei handelt es sich um das nicht umgesetzte 1-Amino-3-(2',6'-difluor-5'-chlor-pyrimidinyl-4'-amino)-benzol. Man findet 0,03 mol. Daraus errechnet sich der Kondensationsgrad c (vergleiche die Formel 1). Aus der geklärten Lösung wird ein kleiner genau abgemessener Anteil entnommen und davon der Diazotierwert bestimmt, woraus sich der Kondensationsgrad d errechnet. Insgesamt werden 0,02 mol nicht umgesetztes 4-β-Sulfatoethyl-sulfonyl-anilin bestimmt. Dann wird der Farbstoff durch Zugabe von 10 Volumenprozent Natriumchlorid ausgefällt, abgesauft und bei 60° im Vakuumtrockenschrank getrocknet. Nach dem Mahlen erhält man ein blaues Farbstoffpulver, das Baumwolle nach den für faserreaktive Farbstoffe üblichen Applikationsverfahren türkisblau färbt (Farbkennzahl 16).

Der Farbstoff entspricht nach obiger Bestimmung etwa der Formel

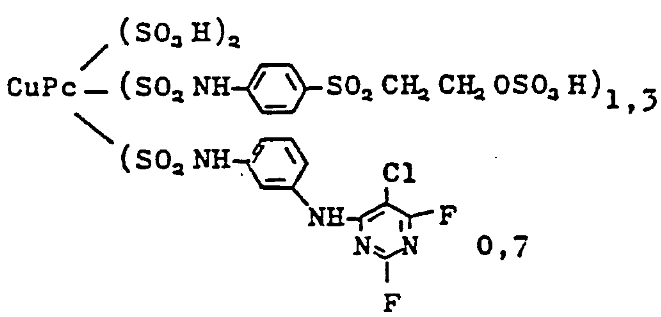

Nach den Angaben dieses Beispiels erhält man weitere coloristisch wertvolle Türkisfarbstoffe, wenn die in Spalte 1 genannten Phthalocyaninsulfochloride und die in Spalte 2 und 3 aufgeführten Amine der Formel (3) und (4) im angegebenen Molverhältnis eingesetzt werden. Die dabei entstehenden Farbstoffe sind durch die Indices a, c und d charakterisiert, die wie bei Beispiel 1 angegeben ermittelt werden.

| Bsp. | Phthalocyaninsulfochlorid | Amin 3 | Amin 4 | a | d | c | Farbton | Farbkennz. |
|---|---|---|---|---|---|---|---|---|
| 2 | 0,1 mol $CuPc(3) \begin{smallmatrix} (SO_3H)_{0,5} \\ (SO_2Cl)_{3,5} \end{smallmatrix}$ | 0,1 mol 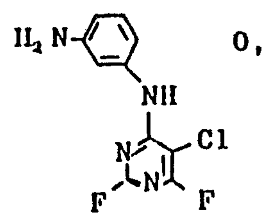 | 0,1 mol 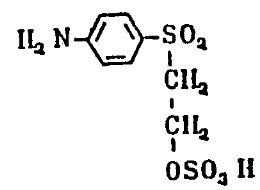 | 2,2 | 0,9 | 0,8 | türkis | 16 |
| 3 | " | 0,1 mol 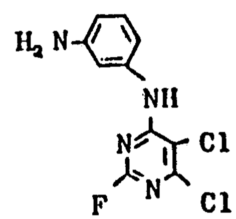 | " | 2,2 | 0,9 | 0,8 | " | 16 |
| 4 | " | 0,1 mol 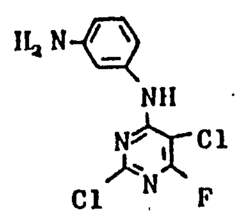 | " | 2,2 | 0,9 | 0,8 | " | 16 |

| Bsp. | Phthalocyaninsulfochlorid | Amin 3 | Amin 4 | a | d | c | Farb-ton | Farb-kennz. |
|---|---|---|---|---|---|---|---|---|
| 5 | 0,1 mol CuPc(3) $(SO_3H)_{0,5}$ $(SO_2Cl)_{3,5}$ | 0,1 mol 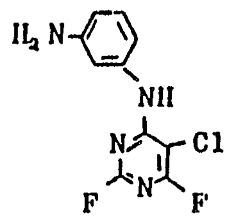 | 0,15 mol 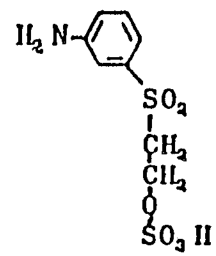 | 2 | 1,3 | 0,7 | türkis | 16 |
| 6 | 0,1 mol NiPc(3) $(SO_3H)_{0,5}$ $(SO_2Cl)_{3,5}$ | " | 0,15 mol 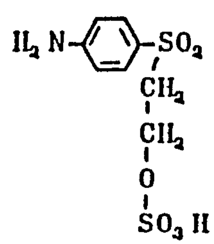 | 1,9 | 1,3 | 0,8 | grün | 17 |
| 7 | 0,1 mol NiPc(3)-$(SO_2Cl)_3$ | " | " | 1,2 | 1,2 | 0,6 | " | 17 |

Beispiel 8

0,1 Mol wasserfeuchte Paste Kupferphthalocyanin(3)-sulfochlorid-sulfonsäure der durchschnittlichen Zusammensetzung

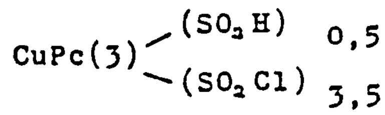

werden in 300 ml Eiswasser angerührt. Man stellt auf pH 6 und fügt 0,1 mol 4-β-Sulfatoethyl-sulfonyl-anilin als neutrale Lösung und 0,1 mol 1-Amino-3-(2',6'-difluor-5'-chlorpyrimidinyl-4'-amino)-benzol und 2 g Nicotinsäure zu, erwärmt auf 40° und acyliert solange im pH-Bereich von 5,5-6 bis ca. 0,2 mol Natronlauge verbraucht sind. Dann tropft man Ammoniaklösung bei 40° ein und hält den pH bei 6,2-6,8. Wenn keine Ammoniaklösung verbraucht wird, verdünnt man mit Wasser bis der Farbstoff bei 40-45° gelöst ist und klärt. Die Bestimmung der Indices c und d wird in der gleichen Weise wie bei Beispiel 1 vorgenommen. Der Farbstoff wird mit 10 Volumenprozent Kochsalz ausgesalzen, abgesaugt, bei 60° im Vakuumtrockenschrank getrocknet und gemahlen. Man erhält ein blaues Farbstoffpulver, das Baumwolle nach einem der für faserreaktive Farbstoffe üblichen Applikationsverfahren rotstichig türkisblau färbt (Farbkennzahl 16).

Der Farbstoff entspricht nach obiger Bestimmung etwa der Formel

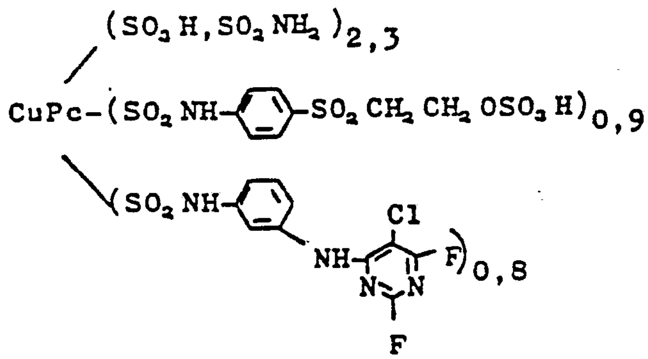

Verfährt man nach der in Beispiel 8 beschriebenen Weise, verwendet jedoch anstelle der dort eingesetzten Ammoniaks die nachfolgend genannten Amine, so erhält man erfindungsgemäß ebenfalls Farbstoffe mit vergleichbar guten coloristischen Eigenschaften: Methylamin, Ethylamin, Ethanolamin, Taurin, Diethanolamin, Aminoessigsäure.

**Patentansprüche**

1. Phthalocyanin-Reaktivfarbstoffe, die in Form der freien Säure der Formel

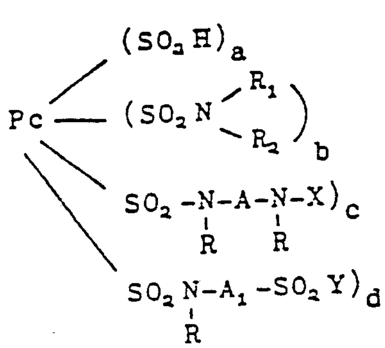

entsprechen, worin

Pc = Rest eines Phthalocyanins

$R_1$ und $R_2$ gleich oder verschieden sein können und für Wasserstoff oder gegebenenfalls substituiertes $C_1$-$C_6$-Alkyl stehen können oder worin $R_1$ und $R_2$ zusammen mit dem durch sie eingeschlossenen Stickstoffatom einen gegebenenfalls weitere Heteroatome enthaltenden heterocyclischen Rest bilden

R = Wasserstoff, gegebenenfalls substituiertes C1-C6-Alkyl
A, A1 = zweiwertiger aliphatischer, araliphatischer oder aromatischer Rest
X = Pyrimidinrest, der mindestens ein abspaltbares Fluoratom enthält
Y = $-CH=CH_2$ oder $-CH_2\text{-}CH_2\text{-}Z$, wobei Z eine abspaltbare Gruppe bedeutet,
a = 0 bis 2
b = 0 bis 1
c = 0,2 bis 2
d = 0,2 bis 2
wobei a + b + c + d = 3-4 und d + d = 1-3,
mit Ausnahme der Farbstoffe der Formeln

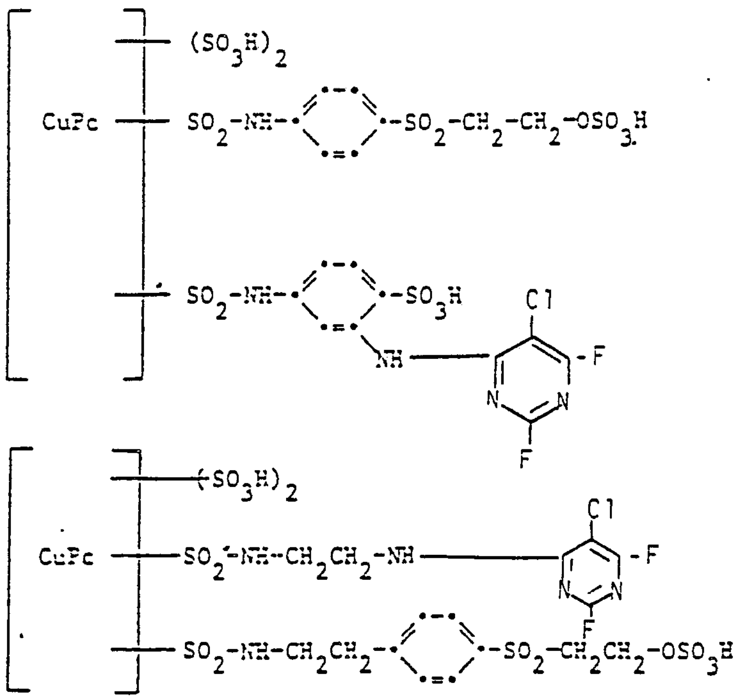

und

2. Farbstoffe des Anspruchs 1, worin R, $R_1$, $R_2$ = H

A, $A_1$ = 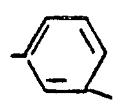 oder 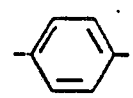

Y = $CH_2CH_2OSO_3H$.

3. Farbstoffe der Ansprüche 1-2, worin

X = 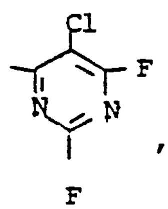, 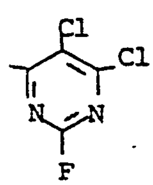, 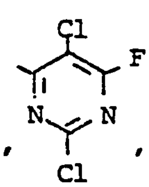, 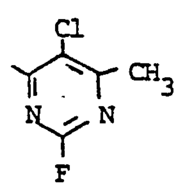

4. Farbstoffe der Ansprüche 1-3, worin c + d = 1,5-2,5.

5. Verwendung der Farbstoffe der Ansprüche 1-4 zum Färben und Bedrucken Hydroxygruppen- und/oder Amidgruppen enthaltender Materialien.

## Claims

1. Phthalocyanine reactive dyestuffs which, in the form of the free acid, conform to the formula

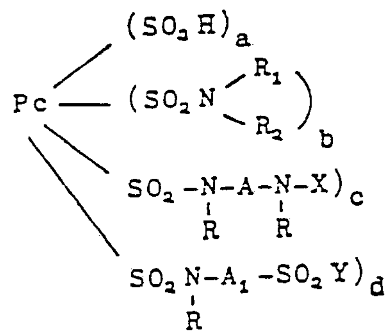

wherein

Pc = a radical of a phthalocyanine

$R_1$ and $R_2$ can be identical or different and can stand for hydrogen or optionally substituted $C_1$-$C_6$-alkyl, or wherein $R_1$ and $R_2$, together with the nitrogen atom enclosed by them, form a heterocyclic radical which optionally contains further hetero atoms

R = hydrogen, optionally substituted $C_1$-$C_6$-alkyl

A, $A_1$ = a divalent aliphatic, araliphatic or aromatic radical

X = a pyrimidine radical which contains at least one detachable fluorine atom

Y = $-CH=CH_2$ or $-CH_2-CH_2-Z$, where Z denotes a detachable group,

a = 0 to 2

b = 0 to 1

c = 0.2 to 2

d = 0.2 to 2

where a + b + c + d = 3-4 and c + d = 1-3 with the exception of the dyestuffs of the formulae

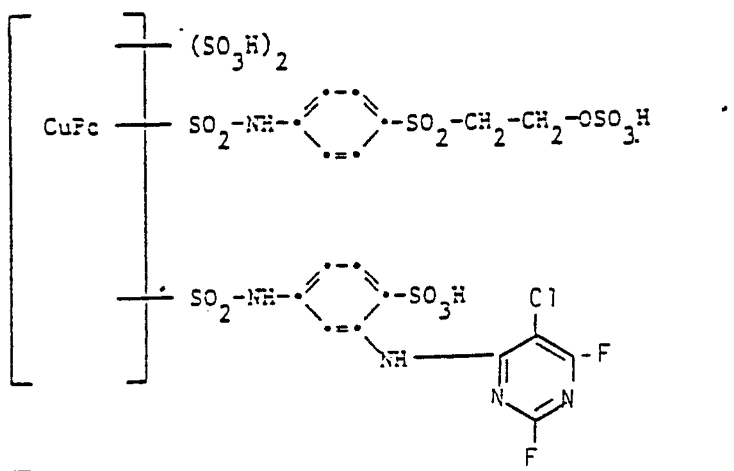

and

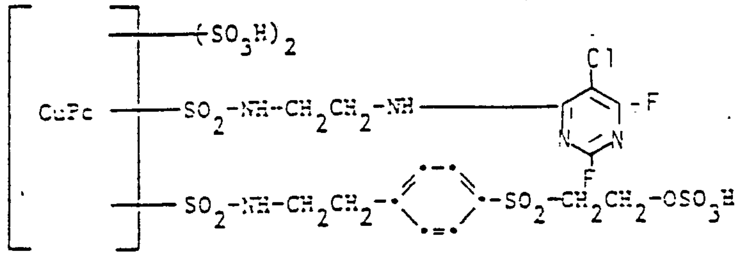

2. Dyestuffs of Claim 1, wherein R, $R_1$, $R_2$ = H

A, $A_1$ = 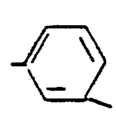 or 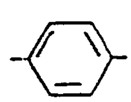

Y = $CH_2CH_2OSO_3H$.

3. Dyestuffs of claims 1-2, wherein

X = 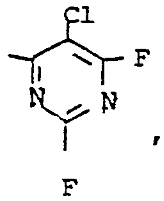, 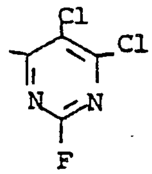, 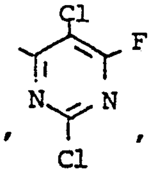, 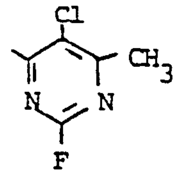

4. Dyestuffs of Claims 1-3, wherein c + d = 1.5-2.5.

5. Use of the dyestuffs of Claims 1-4 for dyeing and printing hydroxyl- and/or amide-containing materials.

**Revendications**

1. Colorants réactifs dérivés de phtalocyanine qui, sous la forme de l'acide libre, répondent à la formule

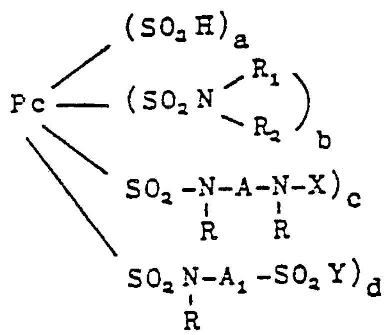

dans laquelle

Pc est le reste d'une phtalocyanine

$R_1$ et $R_2$ peuvent être identiques ou différents et peuvent représenter l'hydrogène ou un groupe alkyle en $C_1$ à $C_6$ éventuellement substitué, ou bien $R_1$ et $R_2$ forment conjointement avec l'atome d'azote auquel ils sont liés un reste hétérocyclique contenant éventuellement d'autres hétéro-atomes

R représente l'hydrogène, un groupe alkyle en $C_1$ à $C_6$ éventuellement substitué

A, $A_1$ représentent un reste aliphatique, araliphatique ou aromatique divalent

X est un reste pyrimidine qui contient au moins un atome éliminable de fluor

Y est un groupe $—CH = CH_2$ ou $—CH_2—CH_2—Z$, où Z est un groupe éliminable

a a une valeur de 0 à 2

b a une valeur de 0 à 1

c a une valeur de 0,2 à 2

d a une valeur de 0,2 à 2

la somme a + b + c + d ayant une valeur de 3 à 4 et la somme de c + d ayant une valeur de 1 à 3, à l'exception des colorants de formules

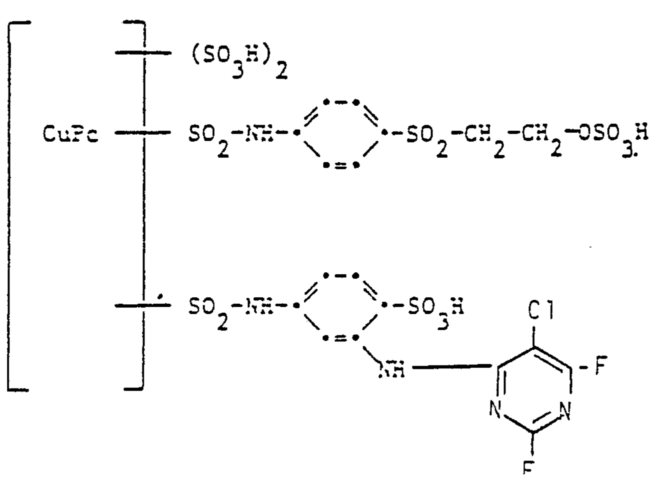 et

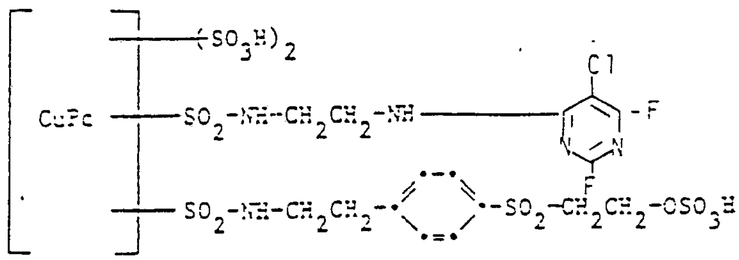

2. Colorants suivant la revendication 1, dans lesquels R, $R_1$, $R_2$ = H

A, $A_1$ = 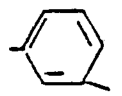 ou 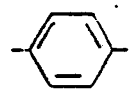

Y = $CH_2CH_2OSO_3H$.

3. Colorants de formules 1-2, où

X = 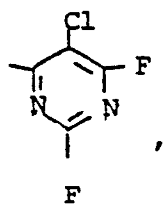, 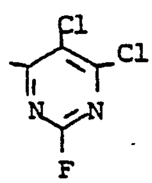, 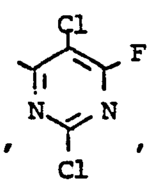, 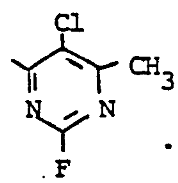.

4. Colorants suivant les revendications 1 à 3, dans lesquels la somme c + d a une valeur de 1,5 à 2,5.

5. Utilisation des colorants suivant les revendications 1 à 4 pour la teinture et l'impression de matières contenant des groupes hydroxy et/ou amide.